# EUROPÄISCHE PATENTANMELDUNG

(11) **EP 2 573 263 A1**
(43) Veröffentlichungstag der Anmeldung: **27.03.2013**
(21) Anmeldenummer: 12184959.0
(22) Anmeldetag: 19.09.2012
(51) Int. Cl.: D21G 1/02, D21F 3/08, F16C 13/00

(54) **Compositewalze mit antistatischer dünnwandiger Beschichtung**

(30) Priorität: 23.09.2011 DE 102011083275
(71) Anmelder: Voith Patent GmbH, 89522 Heidenheim (DE)
(72) Erfinder: Gruber, Harald, 2630 Ternitz (AT); Maurer, Thomas, 2632 Grafenbach (AT)

(57) **Zusammenfassung**

Die Erfindung betrifft einen dünnen Walzenbezug für eine Compositewalze (10) zur Verwendung in einer Maschine für die Herstellung oder Verarbeitung bahnförmiger Materialien, wobei der Walzenbezug (4) eine hohlzylindrische oder fassförmige innere Bezugslage (4a) und eine zumindest auf einem Teil der Mantelfläche der inneren Bezugslage (4a) angeordnete äußere Bezugslage (4b) aufweist, und wobei die innere Bezugslage (4a) von einem polymeren faserverstärkten Verbundwerkstoff und die äußere Bezugslage (4b) von einem Polymer oder Polymergemisch mit darin eingebetteten partikelförmigen Füllstoffen gebildet ist.

## Beschreibung

Die vorliegende Erfindung betrifft Bezüge für Walzen mit Kernen aus Verbundkunststoffen und bezieht sich im Besonderen auf mit einem Bezug versehene Walzen mit Kernen aus kohlenstofffaserverstärkten Kunststoffen.

Walzen mit Walzenkernen auf Basis von faserverstärkten Kunststoffen, sogenannte Compositewalzen, und insbesondere mit Walzenkernen auf Basis von kohlenstofffaserverstärkten Kunststoffen, sogenannte CFK-Walzen, weisen in der Regel eine höhere Steifigkeit auf als Walzen mit Walzenkernen auf Stahlbasis.

Während der Elastizitätsmodul von Stahlwalzen bei etwa 220 GPa angesiedelt ist, können CFK-Walzen mit Elastizitätsmodulen von etwa 80 bis etwa 300 GPa hergestellt werden und sind somit bei gleichem Durchmesser durch das höhere Flächenträgheitsmoment wesentlich steifer. Ihr Verbundaufbau resultiert in einer deutlich höheren Biegeeigenfrequenz, wodurch sie mit wesentlich höheren Rotationsgeschwindigkeiten betrieben werden können als Stahlwalzen, ohne dass störende Vibrationen auftreten. Im Gegensatz zu Stahlwalzen benötigen Compositewalzen keine Anlaufzeit, um einheitlich erwärmt zu sein, wodurch sich z.B. bei der Papierherstellung der Papierausschuss zu Beginn eines Produktionslaufs deutlich reduziert.

Die Steifigkeit von Compositewalzen kann durch Wahl eines geeigneten Fasermaterials und durch entsprechende Auslegung der Faserwicklungen innerhalb eines großen Bereichs eingestellt und damit für den jeweiligen Betriebszweck der Walze "maßgeschneidert" werden. Das spezifische Gewicht von kohlenstofffaserverstärkten Kunststoffen (CFK) entspricht beispielsweise nur in etwa einem Fünftel dessen von Stahl, so dass CFK-Walzen wesentlich leichter als Stahlwalzen ausgeführt werden können, wodurch sie in Verbindung mit ihrer höheren Steifigkeit in z. B. Papiermaschinen unkompliziert eingesetzt werden können und gleichzeitig weniger Energie zum Betrieb benötigen.

Aufgrund der beschriebenen Eigenschaften kommen Compositewalzen nicht nur in Papiermaschinen zunehmend zum Ersatz, sondern werden in verstärktem Maße auch in Applikationsgebieten wie der Folien-, Vlies- und Textilverbundherstellung eingesetzt.

Bei Compositewalzen besteht der Walzenkern aus einem faserverstärkten Kunststoff, beispielsweise einem kohlenstofffaserverstärkten Kunststoff, dessen Aufbau und Gestaltung im Wesentlichen durch die mechanischen Belastungen beim bestimmungsgemäßen Gebrauch der Walze bestimmt sind.

Im Gegensatz hierzu bestimmen sich die Eigenschaften der Mantelfläche der Walze bzw. des Bereiches hiervon, der zum Kontakt mit einem um die Walze geführten bahnförmigen Gegenstand vorgesehen ist, aus den jeweiligen Aufgaben der Walze in Bezug auf die Führung des Gegenstands. Bei Einsatz als Leitwalze für Bahnwaren wie z. B. bei der Papier- bzw. Kartonherstellung produzierten Faserstoffbahnen, Folien-, Vlies- oder Textilverbundstoffbahnen muss die Kontaktoberfläche der Walze den Erfordernissen der Bahnwarenführung entsprechend gestaltet sein.

Beispielsweise muss die Haftreibung zwischen Walzenoberfläche und einer diese umschlingenden Bahnware so groß sein, dass kein Schlupf auftritt. Umgekehrt muss die Haftung der Bahnware auf der Walzenoberfläche gering genug sein, dass sich die Bahnware beim Entfernen von der Walze leicht ablöst und es somit zu keiner Faltenbildung in der Bahnware kommen kann. Schließlich muss jegliche elektrostatische Aufladung der Walze vermieden werden, da diese die Haftung der Bahnware auf der Walzenoberfläche und damit die Blattabgabe negativ beeinflusst und außerdem auch eine nicht unerhebliche Gefährdung des Personals darstellt.

Da die genannten Anforderungen von einem faserverstärkten Kunststoff in der Regel nicht erfüllt werden, weisen Compositewalzen üblicherweise einen Bezug auf, der die Mantelfläche des Walzenkerns umgibt und die zur Bahnführung notwendigen Oberflächeneigenschaften besitzt. Die Materialien zur Ausbildung der Walzenoberfläche unterscheiden sich chemisch wie physikalisch oft sehr wesentlich von denen des Walzenkerns. Walzenbezüge sind daher im Allgemeinen zweischichtig aufgebaut, mit einer an den Walzenkern anschließenden Grundschicht und einer äußeren Funktionsschicht, die zum Kontakt mit der Bahnware vorgesehen ist.

Zur Ausbildung der Funktionsschicht werden gegenwärtig Bezugsmaterialien aus gummielastischen Materialien verwendet, die mit einer Dicke von etwa 10 mm ein Gewicht aufweisen, das bis zu etwa einem Drittel des Walzengewichts betragen kann. Da diese Schichten nahezu keine Eigensteifigkeit besitzen, führt deren hohes Eigengewicht zu einer nachteiligen Veränderung der Biegeeigenfrequenz von Compositewalzen mit der Folge einer reduzierten maximalen Umdrehungsgeschwindigkeit.

Zur Ausbildung von Funktionsschichten mit geringeren Dicken werden gelcoatartige Materialien wie z. B. mit Kieselsäure angedickte Kunstharze verwendet. Gelcoatartige Materialien weisen eine gute Haftung auf faserverstärkten Kunststoffen auf, wie sie beispielsweise zur Herstellung der Grundschicht verwendet werden. Allerdings ist die Verschleißfestigkeit von Gelcoats nur gering. Auch sind die Möglichkeiten einer Manipulation der funktionellen Eigenschaften von Gelcoats in Bezug auf drüber geführte Bahnware gering.

Es ist daher wünschenswert, einen Bezug für Compositewalzen bzw. Compositewalzen mit einem Bezug anzugeben, dessen funktionelle Eigenschaften auf ein bestimmtes Anwendungsgebiet der jeweiligen Compositewalze abgestimmt werden können, und der die durch den Walzenkern gegebene Steifigkeit und Biegeeigenfrequenz der Compositewalze nicht wesentlich beeinträchtigt.

Ausführungsformen solcher Compositewalzen zur Verwendung in einer Maschine für die Herstellung oder Verarbeitung bahnförmiger Materialien umfassen einen Walzenbezug mit einer hohlzylindrischen oder fassförmigen inneren Bezugslage und einer zumindest auf einem Teil der Mantelfläche der inneren Bezugslage angeordneten äußeren Bezugslage, wobei die innere Bezugslage von einem polymeren faserverstärkten Verbundwerkstoff und die äußere Bezugslage von einem Polymer oder Polymergemisch mit darin eingebetteten partikelförmigen Füllstoffen gebildet ist. Der Walzenbezug ist dabei auf einem Walzenkern aus faserverstärktem Kunststoff aufgebracht, der als rotationssymmetrischer Hohlkörper ausgebildet ist.

Der Walzenbezug bedeckt dabei die Mantelfläche des Walzenkörpers über dessen gesamten Umfang und zumindest entlang eines Teils von dessen Länge.

In diesem Zusammenhang wird darauf hingewiesen, dass die in dieser Beschreibung und den Ansprüchen zur Aufzählung von Merkmalen verwendeten Begriffe "umfassen", "aufweisen", "beinhalten", "enthalten" und "mit", sowie deren grammatikalische Abwandlungen, generell als nichtabschließende Aufzählung von Merkmalen, wie z.B. Komponenten, Verfahrensschritten, Einrichtungen, Bereichen, Größen und dergleichen aufzufassen sind und in keiner Weise das Vorhandensein anderer oder zusätzlicher Merkmale oder Gruppierungen von anderen oder zusätzlichen Merkmalen ausschließen.

Ein Walzenbezug mit einer von einem polymeren faserverstärkten Verbundwerkstoff gebildeten inneren Bezugslage und einer von einem Polymer oder Polymergemisch mit darin eingebetteten partikelförmigen Füllstoffen gebildeten äußeren Bezugslage ermöglicht die Trennung von Oberflächeneigenschaften und Volumeneigenschaften eines Bezugs, so dass die innere Bezugslage der Elastizitäts- und Festigkeitsanforderungen an die Compositewalze und die äußere Bezugslage unabhängig davon bezüglich Verschleißfestigkeit, Haftreibung und Antihafteigenschaften optimiert werden kann. Durch diese Funktionsaufteilung und der zur Steifigkeit der Gesamtwalze beitragenden Ausführung der inneren Bezugslage kann der Walzenbezug wesentlich dünner als bisher möglich ausgeführt werden, ohne dass seine Standzeit hierdurch beeinträchtigt wird.

Ausführungsformen weisen eine Faserverstärkung des Verbundwerkstoffs der inneren Bezugslage auf, die Kohlenstofffasern umfasst, wodurch eine hochfeste Beschichtungslage bei gleichzeitig geringem Gewicht geschaffen werden kann, die zudem eine elektrische Leitfähigkeit zum Vermeiden bzw. Abbau elektrostatischer Aufladungen aufweist. Alternativ oder zusätzlich weist die innere Bezugslage weiterer Ausführungsformen im Verbundwerkstoff eingebettete partikelförmige, elektrisch leitfähige Füllstoffe auf, die ein vorteilhaftes Abführen elektrostatischer Aufladungen ermöglichen.

Ausgestaltungen der angeführten Ausführungsformen weisen einen Anteil an Kohlenstofffasern und/oder elektrisch leitfähigen Füllstoffpartikeln im Verbundwerkstoff der inneren Bezugslage auf, der so gewählt ist, dass der spezifische elektrische Widerstand des Verbundmaterials maximal 10⁶ Ωm beträgt.

Um eine gute Haftung auf einem Walzenkern aus faserverstärktem Kunststoff sicherzustellen und thermische Spannungen zwischen Walzenkern und darauf angebrachtem Bezug gering zu halten, beträgt der Anteil der Polymermatrix am Verbundwerkstoff der inneren Bezugslage bei bevorzugten Ausführungsformen wenigstens 83 Gew.-%.

Zur Ausbildung einer möglichst dünnen und dennoch verschleißfesten äußeren Bezugslage ist das Material bzw. sind die Materialien des dieses bzw. diese bildenden Polymers oder Polymergemisches unter Epoxydharzen, Phenolharzen, Polyurethanen, Polyethern und Polyetheretherketonen ausgewählt.

Bei bevorzugten Ausführungsformen hiervon umfasst das Polymer der äußeren Bezugslage einen Polyurethanlack, da dieser eine gute Haftung auf der Grundschicht und eine hohe Beständigkeit gegenüber Lösemitteln, Chemikalien und Umgebungseinflüssen aufweist.

Zur Herstellung einer äußeren Bezugslage mit bestimmten Oberflächeneigenschaften umfassen die in deren Polymermatrix eingebetteten partikelförmigen Füllstoffe vorzugsweise eines oder mehrere Pulver aus Ruß, Graphit, Aluminium, Kupfer, Nickel, Siliciumoxid, Aluminiumoxid, Titandioxid, Siliciumcarbid, Titancarbid, Kreide und Polyfluorethylen.

Polyfluorethylen und hiervon insbesondere Polytetrafluorethylen dient der Verbesserung der Antihafteigenschaften der äußeren Bezugslage. Die Antihafteigenschaft wird durch ein Schleifen der Oberfläche weiterhin verbessert, da das Material der Polyfluorethylenpartikel hierdurch direkt an die Oberfläche des Bezugs dringt.

Zur Ausbildung von sehr dünnen äußeren Bezugslagen mit den gewünschten Oberflächeneigenschaften sind die in der Polymermatrix der äußeren Bezugslage eingebetteten partikelförmigen Füllstoffe von Nanopulvern gebildet.

Gemäß einer weiteren vorteilhaften Ausführungsform kann die innere Bezugslage im Verbundwerkstoff eingebettete faserförmige, elektrisch leitfähige Füllstoffe enthalten.

Bevorzugt können die eingebetteten faserförmigen Füllstoffe eine oder mehrere Faserarten ausgewählt aus Aramidfasern, Polyesterfasern, Kohlefasern, Edelstahlfasern, Carbonnanotubes aufweisen, wobei die eine oder mehrere Faserarten zumindest teilweise aus einem Metall bestehen oder mit einem Metall wie Kupfer, Nickel, Silber überzogen sein können.

Eine antistatische Walzenoberfläche wird vorteilhaft mit äußeren Bezugslagen erzielt, die partikelförmige, elektrisch leitfähige Füllstoffe in einer Konzentration enthalten, die einen spezifischen elektrischen Widerstand der äußeren Bezugslage von weniger oder gleich 10⁶ Ωm zur Folge hat.

Vorteilhaft ist die Dicke der äußeren Bezugslage auf das zur Herstellung einer verschleißfesten Oberfläche erforderliche Minimum beschränkt und weist bei Ausführungen Werte aus dem Bereich von 100 bis 500 µm auf.

Der Walzenkern der Compositewalze ist bei bevorzugten Ausführungsformen aus kohlenfaserverstärktem Kunststoff gebildet, da hierdurch Walzen hoher Steifigkeit bei geringem Gewicht gebildet werden können. Um thermische Spannungen zwischen Walzenkern und Walzenbezug gering zu halten, beträgt die Dicke der inneren Bezugslage bei Ausführungsformen vorzugsweise ein Fünftel oder weniger der Wandstärke des Walzenkerns, und bei besonders bevorzugten Ausführungsformen 12 % oder weniger der Wandstärke des Walzenkerns.

Vorteilhafte Ausführungsformen einer Compositewalze weisen einen Walzenkern auf, dessen Wandstärke aus dem Bereich von 10 bis 20 mm gewählt ist. Compositewalzen mit entsprechenden Walzenkernen weisen eine zur Anwendung in Maschinen zur Herstellung oder Verarbeitung von bahnförmigen Materialien ausreichende Steifigkeit auf, ermöglichen aufgrund ihres geringen Gewichts einen energieeffizienten Betrieb dieser Maschinen.

Weitere Merkmale der Erfindung ergeben sich aus der nachfolgenden Beschreibung von Ausführungsbeispielen in Verbindung mit den Ansprüchen sowie den beiliegenden Figuren. Es sei darauf hingewiesen, dass die Erfindung nicht auf die Ausführungsformen der beschriebenen Ausführungsbeispiele beschränkt, sondern durch den Umfang der beiliegenden Patentansprüche bestimmt ist.

Insbesondere können die einzelnen Merkmale bei erfindungsgemäßen Ausführungsformen in anderer Anzahl und Kombination als bei den untenstehend angeführten Beispielen verwirklicht sein. Bei der nachfolgenden Erläuterung einiger Ausführungsbeispiele der Erfindung wird auf die beiliegenden Figuren Bezug genommen, von denen
- Figur 1: den Aufbau einer Compositewalze mit einem dünnwandigen Bezug in einer schematisierten Seitenansicht und einer Schnittdarstellung quer zur Achsrichtung der Walze veranschaulicht, und
- Figur 2: eine längs zur Achsrichtung der Walze von Figur 1 orientierte schematisierte Schnittdarstellung eines auf einem Compositewalzenkern angeordneten dünnwandigen Bezugs
zeigt.

In den Figuren werden gleiche oder ähnliche Bezugszeichen für funktionell gleichwertige oder ähnliche Charakteristiken unabhängig von speziellen Ausführungsformen verwendet.

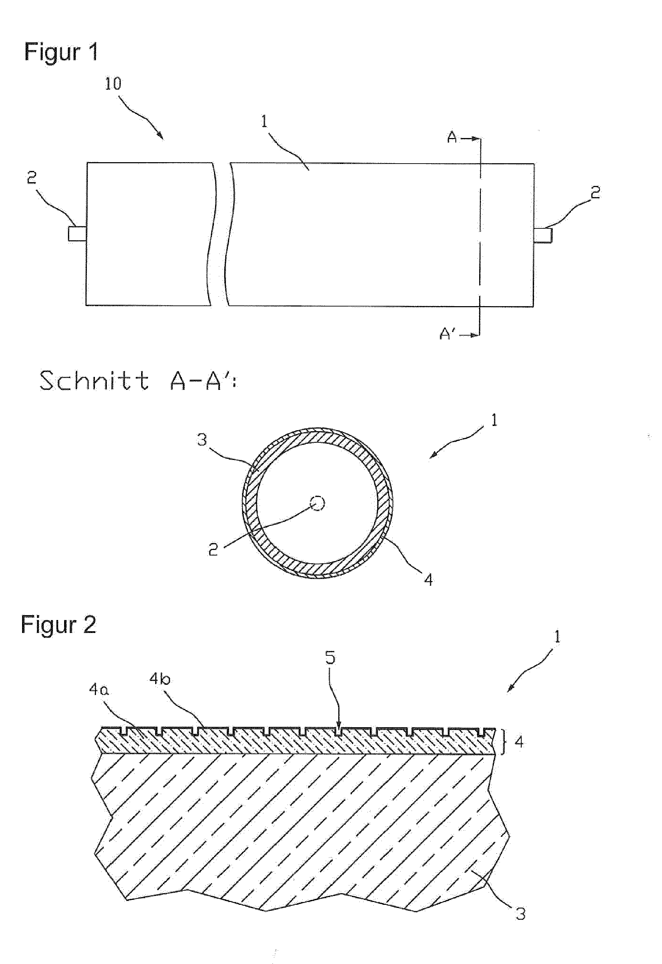

Die schematisierten Darstellungen von Figur 1 veranschaulichen den Aufbau einer Compositewalze 10 mit einem dünnwandigen Walzenbezug 4 in einer Seitenansicht und in einer Schnittansicht. Die Compositewalze 10 weist einen hohlzylinderförmigen oder bombierten, fassförmigen Walzenkörper 1 auf, an dessen beiden Seiten jeweils ein um die Drehachse des Walzenkörpers 1 rotationssymmetrisch ausgebildetes Krafteinleitungselement 2 angebracht ist.

Wie aus der Schnittdarstellung A-A' ersichtlich, besteht der Walzenkörper 1 aus einem Walzenkern 3 und einem Walzenbezug 4, der die Mantelfläche des Walzenkerns überdeckt. Eine vollständige Abdeckung der Mantelfläche des Walzenkerns 3 ist nicht notwendigerweise erforderlich. Bei Walzen 10, die breiter als die über sie geführte Bahnware sind, kann ein auf die von der Bahnware beanspruchte Lauffläche beschränkter Bezug 4 des Walzenkörpers 3 ausreichend sein.

Die Schnittdarstellung von Figur 1 illustriert ferner die Lage der Achse eines Krafteinleitungselements 2 relativ zum Walzenkörper 1.

Der Walzenkern besteht bei Compositewalzen aus faserverstärktem Kunststoff und wird durch schraubenförmiges bzw. helikales Wickeln von mit Epoxydharzen getränkten Fasern bzw. Fasersträngen mit bestimmten und unter Umständen von Lage zu Lage unterschiedlichen Ganghöhen und Wickelrichtungen hergestellt. Zum Erzielen dünner und leichter Walzenkerne 3 hoher Steifigkeit werden bevorzugt Kohlenstofffasern verwendet. Das Wickeln des Walzenkerns kann unter Verwendung eines unter Bezeichnung Filament-Winding bekannten Faserwickelverfahrens, eines auch unter dem Namen Pultrusionsverfahren bekannten Strangziehverfahrens, oder eines sogenannten Pullwinding-Verfahrens erfolgen.

Den Epoxydharzen können dabei Füllstoffe zum Erzielen bestimmter Eigenschaften beigemengt sein. Nach dem Aushärten bilden die Epoxydharze die Matrix, in der die Fasern eingebettet sind. Die Matrix verstärkt die Walze zusätzlich und baut Schwingungsenergie ab. Da Compositewalzen in vielen Einsatzgebieten aggressiven Dämpfen ausgesetzt sind, werden zur Einbettung der Kohlenstofffasern vorzugsweise Epoxydharze verwendet, die nach dem Aushärten eine temperatur- und hydrolysebeständige Matrix ausbilden.

Bei Verwendung von Kohlenstofffasern weist der Außendurchmesser von Compositewalzenkernen 3 typischerweise Werte aus dem Bereich von etwa 350 bis 600 mm und Wandstärken aus dem Bereich von etwa 10 bis 20 mm auf.

Der Walzenbezug 4 ist mit dem Walzenkern 3 stoffschlüssig verbunden. Der Walzenbezug 4 weist zwei Lagen auf, von denen die innere Lage 4a, wie aus Figur 2 ersichtlich ist, unmittelbar an die Manteloberfläche des Walzenkerns 3 anschließt.

Die innere Lage 4a bildet die Grundschicht des Walzenbezugs 4 und dient in erster Linie dem Herstellen einer dynamisch festen Verbindung von Walzenkern 3 und Walzenbezug 4. Die äußere Lage 4b bildet die Funktionsschicht des Walzenbezugs 4 und bestimmt die Oberflächeneigenschaften der Lauffläche einer Compositewalze 10, wie z. B. deren Verschleißverhalten und deren Blattabgabe.

Die Grundschicht 4a besteht im Wesentlichen aus einer mit Füllstoffen versehenen faserverstärkten Harzimprägnierung, die auf den Walzenkern 3 gewickelt oder gegossen, ausgehärtet und anschließend in Form geschliffen wird. Zur Faserverstärkung der Grundschicht 4a werden bevorzugt Glas- und Kohlenstofffasern, Aramid- und Kohlenstofffasern, oder Glas-, Aramid- und Kohlenstofffasern verwendet. Dem die Fasern einbettenden Harzmaterial können auch Kurzfasern und weitere Füllstoffe zum Erzielen gewünschter Materialeigenschaften wie z. B. Elastizität bzw. Festigkeit beigemengt sein.

Die Kohlenstofffasern verleihen der Grundschicht 4a eine elektrische Leitfähigkeit, die einer statischen Aufladung der Compositewalze während der Anwendung vorbeugt. Zum Vermeiden elektrostatischer Aufladungen sollte der spezifische elektrische Widerstand der Bezugslage 4a bzw. generell eines Bezugs 4 10⁶ Ωm nicht überschreiten.

Außer durch die Kohlenstofffasern kann eine ausreichende elektrische Leitfähigkeit der Grundschicht auch oder zusätzlich durch Beimengung von elektrisch leitenden Pulvern wie z.B. Graphit oder Metallpulvern eingestellt werden. Die maximale Konzentration an Kohlenstofffasern und leitfähigen Pulvern sollte vorzugsweise ein Sechstel der Gesamtmasse der Grundschicht nicht überschreiten. Als Füllstoffe werden vorzugsweise Pulver verwendet, deren Partikel einen mittleren Durchmesser aus dem Bereich von etwa 0,1 bis 5 µm aufweisen.

Um thermisch induzierte Spannungen zwischen Grundschicht 4a und Compositewalzenkern 3 zu vermeiden bzw. so gering zu halten, dass keine Beeinträchtigung von Walzenkern 3 und Walzenbezug 4 auftritt, werden einerseits die Wickelanordnung bzw. Wickelanordnungen der Fasern in der Grundschicht 4a und das Harz zur Imprägnierung der Fasern so gewählt, dass die Grundschicht 4a einen in etwa isotropen Wärmeausdehnungskoeffizienten mit einem Wert aus dem Bereich von 10•10⁻⁶ bis 35•10⁻⁶ [K⁻¹] aufweist.

Zum anderen wird die Dicke der Grundschicht 4a in Abhängigkeit der Wandstärke des Compositewalzenkerns 3 gewählt, wobei die Dicken von Grundschichten 4a vorzugsweise 20% und insbesondere bevorzugt 12 % der Wandstärke des Compositewalzenkerns 3 nicht überschreiten. Eine für eine bestimmte Compositewalze 10 optimale Dicke der Grundschicht 4a kann vom Fachmann durch entsprechende Versuche bestimmt werden. Generell gilt, je geringer der Elastizitätsmodul des Compositewalzenkerns 3 in dessen Umfangsrichtung, desto dünner sollte die Grundschicht 4a sein. Bei einem Umfangs-Elastizitätsmodul des Compositewalzenkerns 3 von weniger als 20 GPa sollte die Dicke einer Grundschicht 4a beispielsweise 7% der Wandstärke des Compositewalzenkerns 3 nicht oder zumindest nicht signifikant überschreiten.

Die äußere Oberfläche der Grundschicht 4a ist von einer Funktionsschicht 4b überdeckt, die die Oberflächeneigenschaften der Lauffläche einer Compositewalze 10, wie beispielsweise deren Verschleißverhalten oder Blattabgabe, bestimmt.

Die Funktionsschicht 4b ist aus einem Verbundwerkstoff auf der Basis eines Polymers bzw. Polymergemisches als Matrixmaterial und diesem beigemengten Füllstoffen gebildet. Zur Ausbildung der Polymermatrix von Funktionsschichten 4b eignen sich insbesondere Epoxydharze, Phenolharze, Polyurethane, Polyether und Polyetheretherketone, wobei Lacke auf Polyurethanbasis besonders bevorzugt verwendet werden, da diese eine gute Haftung auf den Grundschichten 4a und eine hohe Beständigkeit gegenüber Lösemitteln, Chemikalien und Umgebungseinflüssen aufweisen.

Zur Anpassung von Elastizität und Festigkeit wie Verschleißverhalten der Funktionsschicht 4b an einen jeweiligen Anwendungsfall und natürlich auch an die Grundschicht 4a können der Polymermatrix Füllstoffe auf der Basis von Oxiden, Carbiden, Nitriden oder Boriden, wie unter anderem beispielsweise Siliciumoxid, Aluminiumoxid, Titandioxid, Siliciumcarbid, Titancarbid oder Kreide beigemengt werden.

Der spezifische elektrische Widerstand der Funktionsschicht 4b kann durch die Zugabe von Graphitpulver oder Pulver eines anderen elektrisch leitfähigen Materials sowie durch Zugabe von Fasern, die zumindest teilweise aus einem elektrisch leitfähigen Material bestehen oder mit einem solchen überzogen sind, eingestellt werden. Dies können Aramid-, Kohle- oder Polyesterfasern sein, die mit einer Beschichtung aus Silber oder Nickel versehen sind. Auch der Einsatz von metallischen Fasern wie Edelstahlfasern oder von Carbonnanotubes kann erwogen werden. Außer durch Vermeiden elektrostatischer Aufladungen kann die Blattabgabe einer Bahnware durch Beimengen von Partikeln aus Polyfluorethylen (PFE) und insbesondere aus Polytetrafluorethylen (PTFE) zur Polymermatrix verbessert werden, wobei die Oberfläche der Funktionsschicht nach dem Aufbringen vorzugsweise geschliffen wird, damit ein Teil dieser Partikel an die Oberfläche der Funktionsschicht tritt.

Der Füllstoffgehalt einer Funktionsschicht beträgt bei Ausführungsformen zwischen 2 und 15 Gew.-%.

Die Führung einer Bahnware über eine Compositewalze 10 wird im Wesentlichen von den Oberflächeneigenschaften der Lauffläche der Walze 10 und damit den Oberflächeneigenschaften der Funktionsschicht 4b bestimmt. Zur schlupffreien Führung der Bahnware muss die über die Oberfläche der Funktionsschicht vermittelte Haftreibung ausreichen hoch, zur störungsfreien Blattabgabe muss die Haftung der Bahnware auf der Oberfläche der Funktionsschicht ausreichend gering sein. Die Dicke der Funktionsschicht hat keinen besonderen Einfluss auf Schlupf- und Abgabeverhalten der Walzenlauffläche.

Insbesondere bei Verwendung von Polyurethanlacken, die eine sehr hohe Verschleißbeständigkeit aufweisen und fest auf der darunterliegenden Grundschicht 4a haften, kann die Funktionsschicht sehr dünn ausgeführt sein. Ausführungsformen einer Compositewalze 10 weisen Funktionsschichten mit Dicken aus dem Bereich von etwa 100 bis etwa 500 µm auf. Aufgrund dieser geringen Schichtdicke werden zum Erzielen bestimmter physikalischer und gegebenenfalls chemischer Eigenschaften einer Funktionsschicht Füllstoffe in Form pulverförmiger Materialien und insbesondere in Form von Nanopulvern bevorzugt.

Zur kostengünstigen Herstellung einer Compositewalze 10 mit einem wie zuvor beschriebenen Bezug 4 wird zunächst der Walzenkern 3 unter Anwendung eines der oben angeführten Wickelverfahren gefertigt. Das Aufbringen der Grundschicht 4a erfolgt vorzugsweise in unmittelbarem Anschluss an die Herstellung des Walzenkerns 3, wodurch sich ein zwischenzeitliches Ausspannen und Wiedereinrichten des Kerns 3 in der Wickelmaschine erübrigt.

Zur Fertigung der Grundschicht 4a wird zweckmäßig dasselbe Wickelverfahren wie bei der Fertigung des Walzenkerns 3 verwendet. Nach dem Aushärten der Grundschicht 4a wird deren Oberfläche in die jeweils gewünschte Form mit der dem jeweiligen Einsatzzweck der Walze 10 angepassten Oberflächenrauheit geschliffen.

Das Schleifen erfolgt bevorzugt trocken, d. h. ohne Einsatz von Kühlmedien. Zusätzlich kann die Grundschicht 4a mit einer feinen Rillierung 5 versehen werden. Die Rillierung dient dem Abführen störender Luftpolster, die sich zwischen Bahnware und Lauffläche der Compositewalze unter Umständen bilden können.

Die Rillentiefe kann bei Ausführungsformen 0,25 mm und mehr betragen, ist jedoch stets kleiner als die Dicke der Grundschicht 4a. Schleifen und Rillieren erfolgen zweckmäßig in derselben Aufspannung, d. h. in derselben Bearbeitungsvorrichtung ohne zwischenzeitliches Entfernen der Walze 10.

Nach dem Schleifen und eventuellen Rillieren der Grundschichtoberfläche wird auf diese mit einem Dünnwandstrukturverfahren, beispielsweise Aufspritzen, eine Funktionsschicht 4b aufgebracht. Vorzugsweise werden zur Herstellung des Werkstoffs für die Funktionsschicht 4b Masterbatches verwendet, bei denen die Nonopartikel in einem Polymerkonzentrat dispergiert vorliegen, so dass die Dosierung und Mischung der Nanopartikel durch Mischen entsprechender Masterbatches vorgenommen werden kann.

Abweichend vom Dargestellten kann das Rillieren des Walzenbezugs 4 auch nach dem Aufbringen der Funktionsschicht 4b erfolgen. In diesem Fall erstreckt sich die Funktionsschicht 4b in Abweichung zur Darstellung von Figur 2 nicht in die Rillierung 5.

Mit diesem Verfahren kann beispielsweise eine Compositewalze 10 hergestellt werden, die einschließlich der Krafteinleitungselemente 2 eine Gesamtlänge von 8.800 mm bei einer Länge des Walzenkörpers 1 von 8.500 mm aufweist. Der Durchmesser der Compositewalze 10 beträgt 400 mm. Der Walzenkörper 1 besteht aus einem kohlenfaserverstärkten Kunststoff mit einer Wandstärke von 14 mm, auf dem eine 1,5 mm dicke Grundschicht 4a aufgebracht ist, deren Oberfläche mit einer 0,1 mm dicken, PTFE-Partikel enthaltenden Funktionsbeschichtung 4b überzogen ist.

In die Oberfläche des Bezugs ist eine einer schraubenförmigen Linie folgende Rillierung 5 mit einer Rillentiefe von 0,4 mm eingebracht.

Compositewalzen 10 mit einem Walzenbezug 4 aus einer wie oben beschriebenen Grundschicht 4a und Funktionsschicht 4b weisen eine hohe Steifigkeit auf, da die Grundschicht 4a selbst eine hohe Eigensteifigkeit besitzt und die keine Eigensteifigkeit aufweisende Funktionsschicht 4b äußerst dünn ist. Mit einem Gewicht von etwa 1 bis 3 kg pro Tonne Compositewalzenkern 10 ist der Anteil der Bezugslagen am Walzengesamtgewicht zudem verschwindend gering, so dass sie keinen nennenswerten Einfluss auf die dynamischen Eigenschaften der Compositewalze ausüben.

## Patentansprüche

1. Walzenbezug für eine Compositewalze (10) zur Verwendung in einer Maschine für die Herstellung oder Verarbeitung bahnförmiger Materialien, wobei der Walzenbezug (4) eine hohlzylindrische oder fassförmige innere Bezugslage (4a) und eine zumindest auf einem Teil der Mantelfläche der inneren Bezugslage (4a) angeordnete äußere Bezugslage (4b) aufweist, und wobei die innere Bezugslage (4a) von einem polymeren faserverstärkten Verbundwerkstoff und die äußere Bezugslage (4b) von einem Polymer oder Polymergemisch mit darin eingebetteten partikelförmigen Füllstoffen gebildet ist.

2. Walzenbezug nach Anspruch 1, worin die Faserverstärkung des Verbundwerkstoffs der inneren Bezugslage (4a) Kohlenstofffasern umfasst.

3. Walzenbezug nach Anspruch 1 oder 2, worin die innere Bezugslage (4a) im Verbundwerkstoff eingebettete partikelförmige, elektrisch leitfähige Füllstoffe enthält.

4. Walzenbezug nach Anspruch 2 oder 3, worin der Anteil der Kohlenstofffasern und/oder der elektrisch leitfähigen Füllstoffpartikel im Verbundwerkstoff der inneren Bezugslage (4a) so gewählt ist, dass das Verbundmaterial einen spezifischen elektrischen Widerstand von maximal 10⁶ Ωm aufweist.

5. Walzenbezug nach einem der vorhergehenden Ansprüche, worin der Anteil der Polymermatrix am Verbundwerkstoff der inneren Bezugslage (4a) wenigstens 83 Gew.-% beträgt.

6. Walzenbezug nach einem der vorhergehenden Ansprüche, worin das oder die Materialien des Polymers oder Polymergemisches der äußeren Bezugslage (4b) unter Epoxydharzen, Phenolharzen, Polyurethanen, Polyethern und Polyetheretherketonen ausgewählt sind.

7. Walzenbezug nach Anspruch 6, worin das Polymer der äußeren Bezugslage (4b) einen Polyurethanlack umfasst.

8. Walzenbezug nach einem der vorhergehenden Ansprüche, worin die in der Polymermatrix der äußeren Bezugslage (4b) eingebetteten partikelförmigen Füllstoffe ein oder mehrere Pulver aus Ruß, Graphit, Aluminium, Nickel, Kupfer, Siliciumoxid, Aluminiumoxid, Titandioxid, Siliciumcarbid, Titancarbid, Kreide und Polyfluorethylen umfassen.

9. Walzenbezug nach einem der vorhergehenden Ansprüche, worin die in der Polymermatrix der äußeren Bezugslage (4b) eingebetteten partikelförmigen Füllstoffe von Nanopulvern gebildet sind.

10. Walzenbezug nach Anspruch 1 oder 2, worin die innere Bezugslage (4a) im Verbundwerkstoff eingebettete faserförmige, elektrisch leitfähige Füllstoffe enthält.

11. Walzenbezug nach Anspruch 9, worin die in der Polymermatrix der äußeren Bezugslage (4b) eingebetteten faserförmigen Füllstoffe eine oder mehrere Faserarten ausgewählt aus Aramidfasern, Polyesterfasern, Kohlefasern, Edelstahlfasern, Carbonnanotubes aufweist, wobei die eine oder mehrere Faserarten zumindest teilweise aus einem Metall bestehen oder mit einem Metall wie Kupfer, Nickel, Silber überzogen sind.

12. Walzenbezug nach einem der vorhergehenden Ansprüche, worin die äußere Bezugslage (4b) partikelförmige, elektrisch leitfähige Füllstoffe in einer Konzentration enthält, dass der spezifische elektrische Widerstand der äußeren Bezugslage (4b) geringer oder gleich 10⁶ Ωm ist.

13. Walzenbezug nach einem der vorhergehenden Ansprüche, worin die Dicke der äußeren Bezugslage (4b) einen Wert aus dem Bereich von 100 bis 500 µm aufweist.

14. Compositewalze zur Verwendung in einer Maschine für die Herstellung oder Verarbeitung bahnförmiger Materialien, mit einem Walzenkern (3) aus faserverstärktem Kunststoff und einem Walzenbezug (4) nach einem der vorhergehenden Ansprüche, wobei der Walzenkern (3) als rotationssymmetrischer Hohlkörper ausgebildet ist und der Walzenbezug (4) die Mantelfläche des Walzenkörpers (3) entlang von zumindest einen Teil deren Länge über den gesamten Umfang bedeckt.

15. Compositewalze nach Anspruch 14, worin der Walzenkern (3) aus kohlenfaserverstärktem Kunststoff gebildet ist.

16. Compositewalze nach Anspruch 14 oder 15, worin die Dicke der inneren Bezugslage (4a) ein Fünftel oder weniger der Wandstärke des Walzenkerns (3) beträgt.

17. Compositewalze nach Anspruch 16, worin die Dicke der inneren Bezugslage (4a) 12 % oder weniger der Wandstärke des Walzenkerns (3) beträgt.

18. Compositewalze nach einem der Ansprüche 14 bis 17, worin die Wandstärke des Walzenkerns (3) aus dem Bereich von 10 bis 20 mm gewählt ist.
